## Europäisches Patentamt

## European Patent Office

## Office européen des brevets

(11) Veröffentlichungsnummer: **0 296 350**
B1

(12) **EUROPÄISCHE PATENTSCHRIFT**

(45) Veröffentlichungstag der Patentschrift:
29.08.90

(51) Int. Cl.⁵: **B60K 15/077, F02M 37/00**

(21) Anmeldenummer: 88107666.5

(22) Anmeldetag: 13.05.88

(54) Stautopf für Kraftstoffbehälter.

(30) Priorität: 13.06.87 DE 3719809

(43) Veröffentlichungstag der Anmeldung:
28.12.88 Patentblatt 88/52

(45) Bekanntmachung des Hinweises auf die Patenterteilung:
29.08.90 Patentblatt 90/35

(84) Benannte Vertragsstaaten:
ES FR GB IT SE

(56) Entgegenhaltungen:
DE-B- 2 602 234
DE-C- 2 401 728
DE-C- 3 612 194
FR-E- 76 446
US-A- 3 726 310

(73) Patentinhaber: DAIMLER-BENZ
AKTIENGESELLSCHAFT, Mercedesstrasse 136,
D-7000 Stuttgart 60(DE)

(72) Erfinder: Scheurenbrand, Dieter, Hauffstrasse 21,
D-7448 Wolfschlugen(DE)
Erfinder: Wawra, Helmut, Dr.-Ing., Weishaarstrasse 43,
D-7054 Korb(DE)

ACTORUM AG

**Beschreibung**

Die Erfindung betrifft einen Stautopf für Kraftstoffbehälter mit den Merkmalen des Oberbegriffes von Patentanspruch 1.

Ein Stautopf dieser Art ist aus der DE-PS 2 401 728 bekannt. Seine Abdeckung bildet bei einer erläuterten Alternativlösung zur dargestellten Topfkonstruktion einen Trichter. Zweck dieses Trichters ist es, im Kraftstoffbehälter über den Stautopf hinwegschwappenden Kraftstoff in diesem zu fangen und dadurch eine vermehrte Kraftstoffeinleitung ins Topfinnere sicherzustellen.

Für die Kraftstoffversorgung von Brennkraftmaschinen, insbesondere solchen mit Kraftstoffeinspritzung, wird üblicherweise mehr Kraftstoff zugeführt als für die Verbrennung erforderlich ist. Dabei wird nicht verbrauchter Kraftstoff, insbesondere auf seinem Weg entlang heißer Zonen, erwärmt, wobei dann in der Kraftstoffrückflußleitung Gasblasen entstehen. Bei Ausströmen dieses erwärmten Kraftstoffes aus dem in den Stautopf einmündenden Pumpenkanal der Strahlpumpe entspannen sich die Gasblasen und steigen nach oben. Bei maximal gefülltem Stautopf sammeln sich die Gasblasen in dem durch die konische, sich ins Topfinnere verjüngende Mantelfläche der Abdeckung und den oberen Teil der Topfwandung gebildeten, nach oben geschlossenen Ringraum. Aus diesem werden sie verdrängt, wobei sie sich zwangsläufig entlang der konischen Mantelfläche der Abdeckung im Stautopf nach innen und schräg nach unten bewegen, bevor sie die sich im mittleren Teil der Abdeckung befindende Öffnung erreichen und entweichen können. Bei ihrem Weg zur Öffnung der Abdeckung gelangen sie dabei in die Nähe des Saugfilters, so daß mit dem abzusaugenden Brennstoff auch Gas abgesaugt wird.

Ähnliche Verhältnisse liegen aber auch kann vor, wenn die Abdeckung einen ebenen Deckel bildet. In diesem Falle stehen dann die Gasblasen an der unteren Deckenfläche an und werden in radialer Richtung nach innen zur Deckelöffnung verdrängt, wobei sie gleichfalls nahe an den Saugfilter herankommen, so daß auch dann zusammen mit dem Brennstoff auch Gas abgesaugt wird.

Der Erfindung liegt nun die Aufgabe zugrunde, in einem die im Oberbegriff des Patentanspruches 1 aufgeführten Merkmale aufweisenden Stautopf die Ableitung von Gasblasen zu verbessern bzw. vom Saugfilter Gasblasen fern zu halten.

Diese Aufgabe wird erfindungsgemäß durch die kennzeichnenden Merkmale des Patentanspruches 1 gelöst.

Aufgrund der domartigen Gestaltung der Abdeckung können sich aufsteigende Gasblasen weit oberhalb des Saugfilters an deren Innenfläche anlagern und sich während ihrer weiteren Auftriebsbewegung zur Öffnung der Abdeckung hin vom Saugfilter nach oben wegbewegen.

Eine Ausgestaltung der Erfindung nach Patentanspruch 2 sorgt dafür, daß der in den Stautopf einströmende, mit Gasblasen durchsetzte Kraftstoff über eine verhältnismäßig lange Strecke an einer Vermischung mit sich bereits in dem den Saugfilter enthaltenden Topfinnenraum befindenden Kraftstoff gehindert wird und dabei entgasen kann. Die Menge der Gasblasen kann sich hierbei bereits entlang des Kanalbereiches an die obere Kanalwand anlagern und sich an dieser nach oben entlang bewegen. Dabei bewirkt die in Strömungsrichtung des Kraftstoffes zunehmende Höhe des Leitkanals einen schräg nach oben gerichteten Gasblasenauftrieb, so daß die Gasblasen bei Eintritt des Kraftstoffes in den Topfinnenraum sich bereits nahe des höchsten Raumbereiches und damit vom Saugfilter entsprechend weit weg befinden.

Dabei ist es günstig, die obere Kanalwand des Leitkanales nach Patentanspruch 3 zu gestalten.

Eine weitere Ausgestaltung der Erfindung nach Patentanspruch 4 stellt sicher, daß sich aus dem Pumpenkanal der Strahlpumpe ausströmender Kraftstoff hinter der Kanalausmündung nicht bzw. nicht in solchem Maße verwirbeln kann, daß dadurch Kraftstoff verschäumen und daraus verstärkte Gasblasenbildung resultieren kann.

Eine Ausgestaltung der Erfindung nach Patentanspruch 5 ermöglicht es, den Stautopf aus nur zwei einzelnen, im Spritzverfahren zu fertigenden Teilen (oberer Topfteil und Topfboden) herzustellen, wobei es möglich ist, die Injektordüse sowie den Pumpenkanal der Strahlpumpe zueinander optimal auszurichten und auszuformen.

In der Zeichnung ist ein Ausführungsbeispiel der Erfindung dargestellt. Es zeigen:

Fig. 1 eine teilweise aufgebrochene Voderansicht des Stautopfes,

Fig. 2 einen Schnitt des Stautopfes, entlang der Linie II - II der Fig. 1,

Fig. 3 eine Seitenansicht des Stautopfes, in Richtung des Pfeiles A der Fig. 1 gesehen,

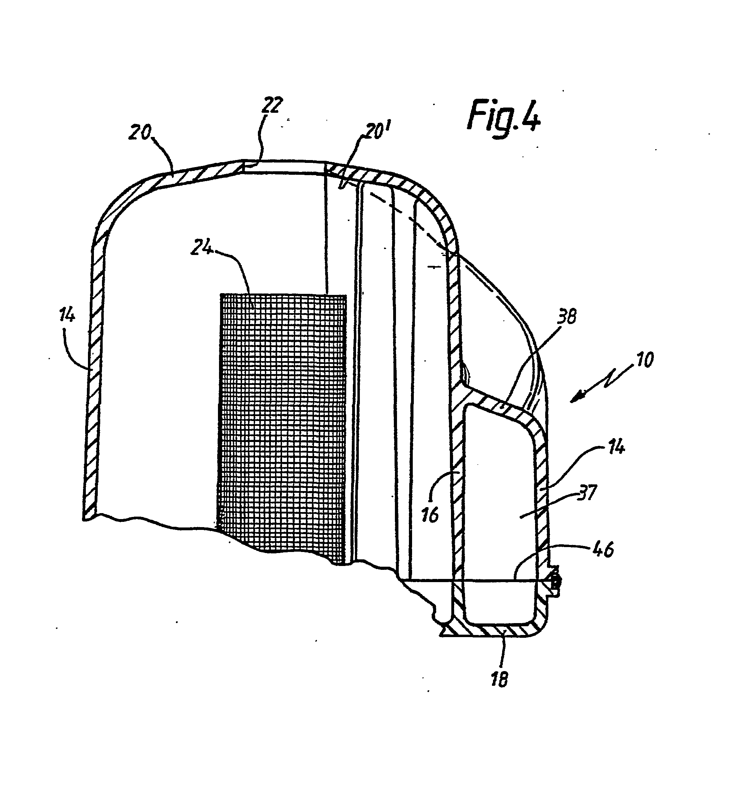

Fig. 4 einen Teilquerschnitt des Stautopfes, entlang der Linie IV - IV der Fig. 3 gesehen,

Fig. 5 einen Teilschnitt entlang der Linie V - V der Fig. 1 gesehen.

Der gezeigte Stautopf 10 sitzt in montiertem Zustand auf dem Boden 11 eines Kraftstoffbehälters eines Kraftfahrzeuges. Er enthält eine Ansaugkammer 12, aus der beim Betrieb einer Brennkraftmaschine des Kraftfahrzeuges ständig Kraftstoff abgezogen wird. Diese ist begrenzt durch Kammerwände 14,16, einen Topfboden 18 und eine domartig geformte Abdeckung 20, in deren mittleren Bereich eine Öffnung 22 vorgesehen ist.

Im Zentrum des Topfbodens 18 sitzt ein von unten in die Ansaugkammer 12 hinragender Saugfilter 24, der mit einem Anschlußnippel 26 den Boden 11 des Kraftstoffbehälters durchsetzt, an dem ein zu einer Kraftstoffeinspritzpumpe führender Ansaugschlauch 28 angeschlossen ist. Ebensogut könnte jedoch ein solcher Saugfilter, insbesondere in Kombination mit einer Intankpumpe, auch durch die obere zentrale Öffnung 22 der Abdeckung 20 hindurchgeführt und der Topfboden 18 geschlossen ausgebildet sein. In diesem Falle dürfte jedoch die Öffnung 22 durch den Saugfilter nicht verschlossen sein.

Die Ansaugkammer 12 wird ständig mit Kraftstoff gefüllt gehalten. Befindet sich genügend Kraftstoff im Kraftstoffbehälter, läuft die Ansaugkammer 12 über deren obere Öffnung 22 von selbst voll. Damit aber auch bei niedrigem Kraftstoffniveau im Kraftstoffbehälter die Ansaugkammer 12 stets ausreichend gefüllt bleibt, ist der Stautopf mit einer Strahlpumpe 30 ausgestattet, mit deren Hilfe während des Betriebes der Brennkraftmaschine im Bodenbereich des Kraftstoffbehälters aus diesem ständig Kraftstoff abgezogen und der Ansaugkammer 12 zugeführt wird. Diese Strahlpumpe 30 sitzt im Bereich des Topfbodens 18 an der Außenseite der in die Kammerwand 16 übergehenden Kammerwand 14 und ist durch eine Injektordüse 32 und einen sich an diese anschließenden, sich in Förderrichtung in etwa trompetenförmig erweiternden Pumpenkanal 34 gebildet.

Letzterer erstreckt sich an der Peripherie eines äußeren Umfangsteil der in der Draufsicht bogenförmig verlaufenden Kammerwand 16, die bei 36 endet und zusammen mit der zu ihr konzentrisch verlaufenden Kammerwand 14 die Ansaugkammer 12 begrenzt.

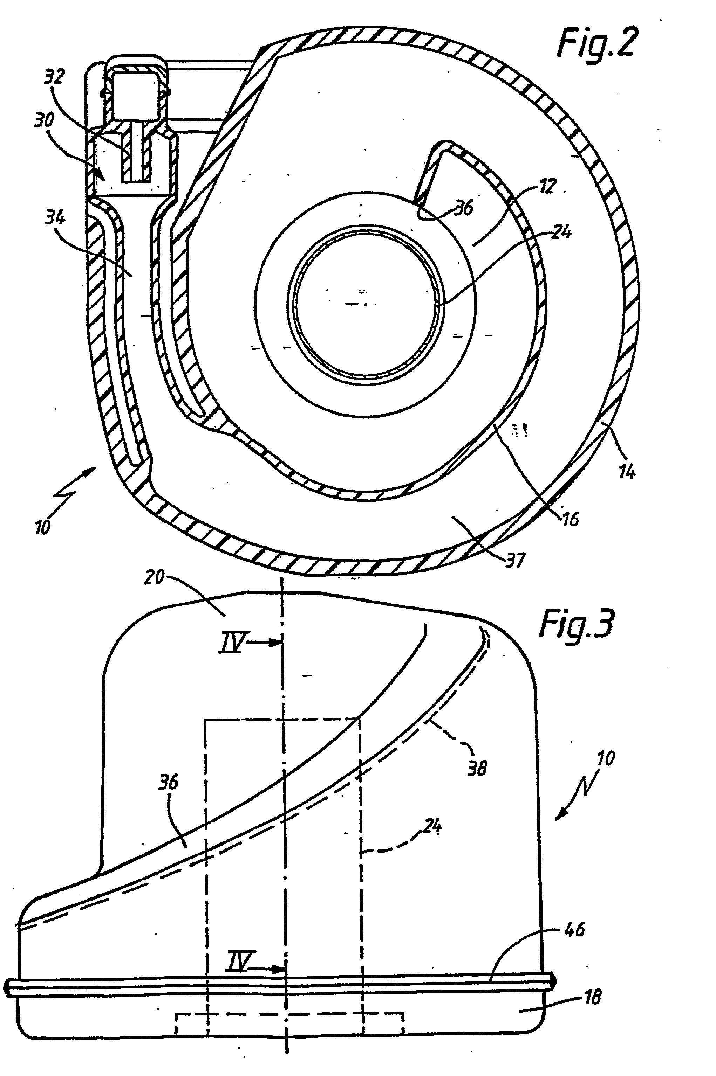

Wie Fig. 2 zeigt, mündet der Pumpenkanal 34 in einen bogenförmigen Leitkanal 37 ein, der von den beiden Kammerwänden 14, 16, dem Topfboden 18 und einer oberen Kanalwand 38 begrenzt ist und nach einem Verlauf von etwa 180° in die Ansaugkammer 12 einmündet. Dieser Leitkanal 37 ist in Richtung des einströmenden Kraftstoffes in der Höhe zunehmend ausgebildet, wobei dessen obere Kanalwand 38, aufgrund des bogenförmigen Kanalverlaufs, wendelförmig ansteigt.

Die Strahlpumpe 30 wird mittels Kraftstoff betrieben, der für den Betrieb der Brennkraftmaschine nicht benötigt wird.

Dieser überschüssige Kraftstoff wird über eine vorzugsweise die obere Wand des Kraftstoffbehälters durchsetzende Kraftstoffrückflußleitung 40 der Injektordüse 32 zugeführt, wobei der aus ihr austretende und in das Hinterende des Pumpenkanals 34 gerichtete Kraftstoffstrahl in der Umgebung der am Stautopf 10 außenseitig angeordneten Injektordüse 32 einen Unterdruck erzeugt, im Kraftstoffbehälter vorhandenen Kraftstoff in den Pumpenkanal 34 mitreißt und der Ansaugkammer 12 zuführt.

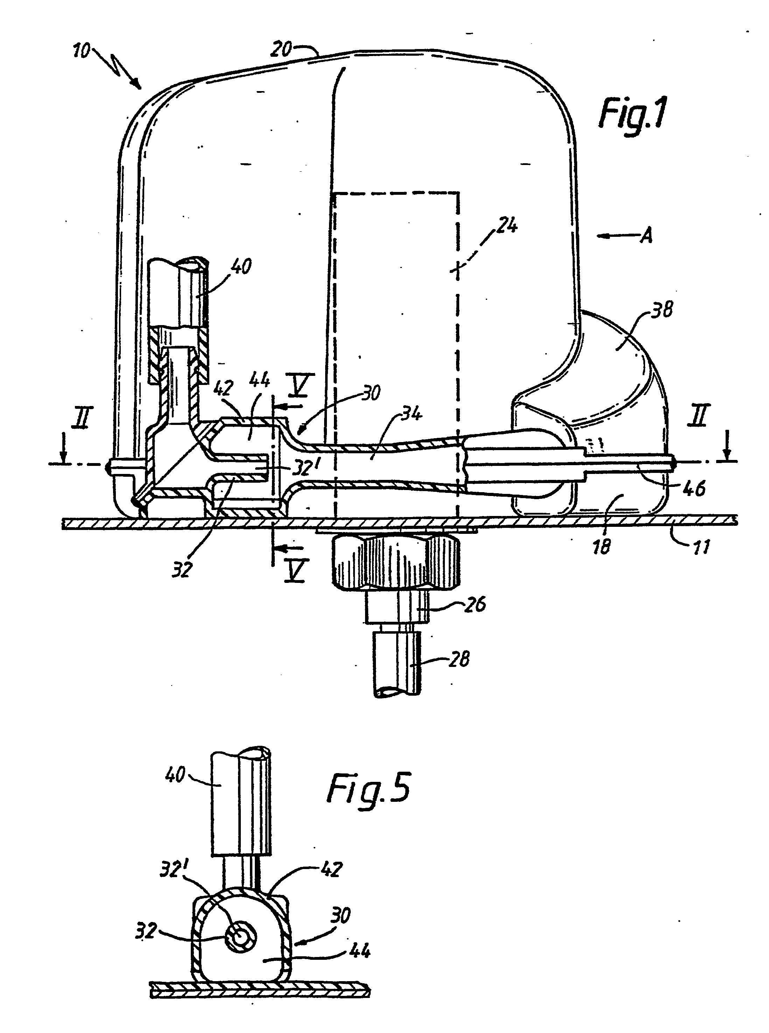

Wie aus den Figuren 1 und 5 ersichtlich ist, ist die Injektordüse 32 von einer Abschirmung 42 überfangen, die sich vom Einlaß des Pumpenkanals 34 wegerstreckt, am Hinterende geschlossen und zur Injektordüse 32 vorzugsweise konzentrisch angeordnet ist (Fig.5). Sie erstreckt sich seitlich der Injektordüse 32 bis in eine unterhalb der Düsenöffnung 32' liegende Ebene. Der aus der Injektordüse 32 ausströmende Kraftstoff zieht Kraftstoff aus dem Kraftstoffbehälter in den Pumpenkanal 34, so daß im Ansaugraum 12 auch bei lediglich noch geringer Kraftstoffmenge im Kraftstoffbehälter ein genügendes Kraftstoffvolumen zum Absaugen ansteht.

Die Abschirmung 42 stellt dabei sicher, daß sich die Injektordüse 32 innerhalb eines nur von unten her zugänglichen Raumes 44 befindet und somit auch noch bei extrem niedrigem Kraftstoffstand ein den Pumpenwirkungsgrad verschlechterndes Schlürfen beim Betrieb der Strahlpumpe 30 vermieden wird. Dabei kann die Konstruktion auch so getroffen sein, daß die Strahlpumpe 30 Kraftstoff lediglich an der Bodenunterseite des Stautopfes ansaugt.

Der aus der Injektordüse 32 austretende, erwärmte Kraftstoff enthält Gasblasen, die sich nach Austritt aus der Injektordüse 32 entspannen und im Kraftstoff aufsteigen. Innerhalb des Leitkanals 37 schwimmen diese bei gefülltem Stautopf an dessen oberer Kanalwand 38 entlang aufwärts, bis sie schließlich im Bereich der Ausmündung des Leitkanales 37 in die Ansaugkammer 12 verhältnismäßig weit oberhalb sowie aufgrund ihrer gerichteten Bewegung innerhalb des Leitkanales 37 radial außerhalb des Saugfilters 24 an der Innenfläche 20' der Abdeckung 20 ankommen und anschließend, auftriebsbedingt, dem höchsten Punkt der domartigen Abdeckung 20 zustreben, wo sie dann über die Öffnung 22 die Ansaugkammer 12 verlassen.

Die beschriebene Konstruktion ermöglicht eine vorteilhafte Herstellung des Stautopfes 10, in dem dieser aus lediglich zwei getrennt herzustellenden Teilen zu fertigen ist. Der eine Teil bildet dabei den Topfboden 18 mit der einen Hälfte der Komponenten 32, 34 der Strahlpumpe 30, während der restliche Teil des Stautopfes 10 den anderen Teil bildet. Die Trennfuge zwischen beiden vorzugsweise aus Kunststoff bestehenden und miteinander verschweißten Teilen ist mit 46 bezeichnet.

**Patentansprüche**

1. Stautopf für Kraftstoffbehälter, der eine sich in Richtung auf eine Öffnung verjüngende Abdeckung (20) und im Bodenbereich eine an der Peripherie angeordnete Strahlpumpe (30) für den von einer Kraftstoffaufbereitungsanlage einer Brennkraftmaschine zurückfließenden Kraftstoff aufweist, deren Pumpenkanal (34) in etwa tangential in das einen Saugfilter (24) enthaltende Topfinnere einmündet, dadurch gekennzeichnet, daß die Abdeckung (20) domartig ausgebildet und der Saugfilter (24) im Abstand unterhalb der Abdeckung (20) angeordnet ist.

2. Stautopf nach Anspruch 1, dadurch gekennzeichnet, daß der Pumpenkanal (34) in einen in das Topfinnere ausmündenden Leitkanal (37) einmündet, der in Richtung des einströmenden Kraftstoffs in der Höhe zunehmend ausgebildet ist.

3. Stautopf nach Anspruch 2, dadurch gekennzeichnet, daß ein oberer Wandteil (38) des Leitkanales (37) bis zur Topfabdeckung (20) wendelförmig verläuft.

4. Stautopf nach Anspruch 2 oder 3, dadurch gekennzeichnet, daß der obere Wandteil (38) des Leitkanals (37) im Bereich der geringsten Kanalhöhe an die Einmündungsstelle des Pumpenkanals (34) angrenzt und diese oben begrenzt.

5. Stautopf nach einem der vorhergehenden Ansprüche 2 bis 4, dadurch gekennzeichnet, daß Topf- und Kanalwandungen (14,16,38), Abdeckung (20) sowie ein Teil des Pumpenkanals (34) und einer Injektordüse (32) der Strahlpumpe (30) ein einstückiges Formteil, insbesondere aus Kunststoff, bilden.

## Claims

1. A retaining box for fuel tanks which has a cover (20) tapering in the direction of an opening and has in the bottom region an injection pump (30) mounted on the periphery for the fuel flowing back from a fuel preparation arrangement of an internal combustion engine, the pump duct (34) of which opens out substantially tangentially into the inside of the box containing a suction filter (24), characterized in that the cover (20) is dome-shaped and the suction filter (24) is mounted at a distance below the cover (20).

2. A retaining box according to claim 1, characterized in that the pump duct (34) opens out into a guide duct (37) opening out into the inside of the box, which guide duct is constructed increasing in height in the direction of the inflowing fuel.

3. A retaining box according to claim 2, characterized in that an upper wall portion (38) of the guide duct (37) extends spirally as far as the cover (20) of the box.

4. A retaining box according to claims 2 or 3, characterized in that the upper wall portion (38) of the guide duct (37) in the region of the smallest duct height adjoins the discharge point of the pump duct (34) and define it upwardly.

5. A retaining box according to one of the foregoing claims 2 to 4, characterized in that the box and duct walls (14, 16, 38), cover (20) as well as a part of the pump duct (34) and of an injection nozzle (32) of the injection pump (30) constitute a single moulded unit, particularly of plastic.

## Revendications

1. Pot de concentration pour réservoir de carburant, qui comporte un capot (20) se rétrécissant en direction d'une ouverture et, dans une zone du fond, une pompe à jet (30), disposée sur la périphérie, pour le carburant refluant à partir d'une installation de préparation de carburant d'un moteur à combustion interne, dont le canal de pompe (34) débouche à peu près tangentiellement à l'intérieur du pot contenant un filtre d'aspiration (24), caractérisé en ce que le capot (20) est profilé en forme de dôme et le filtre d'aspiration (24) est disposé à distance et en dessous du capot (20).

2. Pot de concentration selon la revendication 1, caractérisé en ce que le canal de pompe (34) est relié à un canal directeur (37) débouchant à l'intérieur du pot et qui est agencé en augmentant de hauteur dans la direction de pénétration du carburant.

3. Pot de concentration selon la revendication 2, caractérisé en ce qu'une partie supérieure de paroi (38) du canal directeur (37) s'étend avec un profil ondulé jusqu'au capot (20) du pot.

4. Pot de concentration selon la revendication 2 ou 3, caractérisé en ce que la partie supérieure de paroi (38) du canal directeur (37) est adjacente, dans la zone de hauteur minimale du canal, à l'endroit d'embouchure du canal de pompe (34) et délimite supérieurement celui-ci.

5. Pot de concentration selon une des revendications précédentes 2 à 4, caractérisé en ce que les parois de pot et de canal (14, 16, 38), le capot (20) ainsi qu'une partie du canal de pompe (34) et un injecteur (32) de la pompe à jet (30) constituent une seule pièce de forme profilée, notamment en matière plastique.

4

*Fig.1*

*Fig.5*

*Fig.2*

32

30

34

10

36

12

24

14

16

37

20

*Fig.3*

IV

36

38

10

24

46

IV

18

Fig.4